# EUROPÄISCHE PATENTSCHRIFT

(11) **EP 1 835 237 B1**
(45) Veröffentlichungstag und Bekanntmachung des Hinweises auf die Patenterteilung: **10.09.2008**
(21) Anmeldenummer: 07103874.9
(22) Anmeldetag: 09.03.2007
(51) Int. Cl.: F24F 13/075, B60H 1/34

(54) **Verschwenkbar gelagerte Lamelle in einer Lamellenanordnung in einem Gehäuse einer Luftdüse**
Pivotable lamella in a lamella assembly in the casing of an air jet
Lamelle stockée et pouvant être pivotée dans une installation de lamelles dans un boîtier d'une tuyère d'air

(30) Priorität: 15.03.2006 DE 202006004052 U
(43) Veröffentlichungstag der Anmeldung: 19.09.2007
(73) Patentinhaber: Dr. Schneider Kunststoffwerke GmbH, 96317 Kronach-Neuses (DE)
(72) Erfinder: Trinkwalter, Bernd, 96328, Küps (DE)
(74) Vertreter: Pröll, Jürgen

(56) Entgegenhaltungen:
- EP-A- 1 655 160
- DE-U1-1202004 008 18
- GB-A- 1 470 307

## Beschreibung

Die Erfindung betrifft eine verschwenkbar gelagerte Lamelle in einer Lamellenanordnung in einem Gehäuse einer Luftdüse mit einer vorderen Luftaustrittsöffnung und einem Anschluss an einen Luftzuführschacht, mit den im Anspruch 1 angegebenen Merkmalen.

Aus der GB-A-1 470 307 ist eine Lamellenanordnung für Fenster in Gebäuden bekannt, bei denen die einzelnen Lamellen aus einem metallischen Rahmen bestehen, an dem ein plattenförmiges Kunststoffprofil befestigt ist. Solche Lamellenanordnungen sind für die Verwendung in Luftdüsen aufgrund der Rahmenstruktur nicht geeignet, da dadurch unerwünschte Luftwirbel entstehen würden.

Aus der EP-A-1 655 160 ist eine Lamelle für eine Lamellenanordnung in Kraftfahrzeugbelüftungsdüsen bekannt, die aus einem ersten Bereich und einem sich daran anschließenden zweiten Bereich besteht, der wulstförmig ausgebildet ist. Auf den zweiten Bereich ist ein lösbares Element aufsetzbar, das sich im Wesentlichen über die gesamte Länge der Lamelle erstreckt und kraftschlüssig mit dieser verbunden ist. Das lösbare Element ist so ausgebildet, dass der erste Bereich im aufgesteckten Zustand des Elementes, in Querrichtung der Lamelle gesehen, zumindest teilweise abgedeckt ist. Das Element ist farbig ausgestaltet, so dass hierüber der Lamellenkopf in der gewünschten Farbe erscheint.

Aus der DE 20 2004 008 181 U1 ist ein aus Kunststoff bestehendes Lamellengitter einer vorzugsweise in ein Kraftfahrzeug einbaubaren Luftdüse mit einer Vielzahl verschwenkbarer Lamellen bekannt. Auf mindestens einer Lamelle ist ein längsverschiebbarer Reiter angeordnet, der mit zumindest einer quer zu den Lamellen im Lüftungsgehäuse verschwenkbar angeordneten Richtungslamelle verbunden ist. Mindestens die den Reiter tragende Lamelle weist eine sich in dessen Verschieberichtung erstreckende, aus einem galvanisch bearbeiteten Kunststoff bestehende Leiste auf.

Aus der DE 20 2004 006 461 U1 ist eine Lamelle der gattungsgemäßen Art bekannt. Diese Lamelle besteht aus Kunststoff. Mittig weist die Lamelle ein Schiebeelement auf, das aus zwei Hälften zusammengesetzt ist und rückseitig ein Kraftübertragungselement in Form einer Gabel aufweist, über das eine Antriebseinrichtung oder eine Steuerlamelle, die senkrecht zur Lamelle im Gehäuse angeordnet ist, betätigt werden kann. Der Verschiebeweg des Schiebeelementes ist durch Anschläge begrenzt, die aus der Fläche oder vorderen Stirnseite der Lamelle vorstehen und gegen die inneren Anschlagsflächen des Schiebeelementes greifen. Zwischen den beiden Ansätzen ist eine Vertiefung vorgesehen, in der ein Wälzelement zur Dämpfung der Verschiebebewegung angeordnet ist.

Lamellen der gattungsgemäßen Art mit Schiebelementen sind weiterhin aus der DE 203 07 030 U1, DE 37 19 837 C1, DE 101 32 186 A1, DE 203 16 176 U1 und aus der DE 201 18 014 U1 bekannt. In letzterer Schrift ist das Schiebeelement lichtdurchflutet ausgeführt. In dem Schiebeelement befindet sich eine Lichtquelle, die über auf der aus Kunststoff bestehenden Lamelle angebrachte Stromschienen mit Strom versorgt wird. Die Stromschienen sind entweder aufgedampft, aufgeklebt oder bestehen aus leitfähigem Kunststoff, der in Längsnuten eingebracht ist.

Wenn eine Lamelle in einer Luftdüse, die üblicherweise aus Kunststoff gefertigt ist, eine größere Länge bzw. bei vertikaler Anordnung eine größere Höhe aufweist und ein relativ kleines Schiebeelement oder ein anderes Betätigungselement, z.B. ein Drehsteller, aufgebracht ist, treten bei deren Betätigung erhöhte mechanische Belastungen auf der Lamelle auf, die zum Durchbiegen derselben führen können. Dies kann insbesondere bei mehrjährigem Gebrauch und bei hoher Temperatur der durchströmenden Luft dazu führen, dass die Durchbiegung sich nicht mehr zurückstellt und damit die Betätigung der Einstellelemente schwerer wird. Ferner kann bei jalousieartiger Anordnung von Lamellen ein uneinheitlicher Luftspalt auch durch Eigenverformung der Lamellen auftreten. Es hat sich ferner gezeigt, dass auch bei mechanisch relativ unbelasteten Lamellen solche Verbiegungen, insbesondere bei längerem Gebrauch und bei höheren thermischen Belastungen eintreten können, insbesondere dann, wenn die Lamellen sehr dünn ausgeführt sind.

Ausgehend vom Stand der Technik und von der beschriebenen Problematik liegt der vorliegenden Erfindung die Aufgabe zugrunde, mindestens die Lamelle, die mit Einstellelementen versehen oder als Steuerlamelle ausgebildet ist, bei deren Betätigung die mitgekoppelten weiteren Lamellen einer Jalousie-Anordnung ebenfalls bewegt werden, so auszu-bilden, dass ein Durchbiegen vermieden wird und die Herstellung und Montage preiswert durchführbar ist.

Die Aufgabe löst die Erfindung durch Ausgestaltung der Lamelle gemäß der im Anspruch 1 angegebenen technischen Lehre.

Vorteilhafte Weiterbildungen der Erfindung sind in den Unteransprüchen im Detail angegeben.

Eine Lamelle nach der Erfindung ist ein Verbundelement, bei dem der Metallträger von einer Kunststoffkomponente umspritzt wird und hierdurch unmittelbar die endgültige Form und Oberflächengestaltung annimmt. Durch die Verwendung der Kunststoffkomponente zum Einbetten des Einlegeteils wird zugleich eine gewünschte Oberflächenstruktur erreicht und es ist nicht mehr notwenig, dass das Teil danach spritzlackiert wird. Bestehen die Lamellen in bekannter Weise hingegen aus Druckguss, so müssen die Oberflächen dieser nachbehandelt und lackiert werden, um eine Oberflächengüte zu erreichen. Die Lamellenanordnung kann aus miteinander bewegungsgekoppelten, vertikal oder horizontal oder schräg verlaufend in dem Düsengehäuse verschwenkbar gelagerten Lamellen bestehen. Die Lamellen können aber auch in einem mit dem Gehäuse verbundenen Rahmen gelagert sein. Bei einem drehbaren runden Düsengehäuse weisen die Lamellen unterschiedliche Längen auf und können in beliebige Winkelstellungen zur Horizontalen z. B. des Kraftfahrzeuges eingestellt werden. Die Lamellenanordnung und die Luftdüse finden beispielsweise Verwendung in den Fahrgasträumen eines Kraftfahrzeuges, eines anderen Land- oder Luftfahrzeuges sowie in Fahrgasträumen in Schiffen.

Das gemäß der Erfindung vorgesehene metallische Einlegeteil, das die Lamelle versteift, sollte sich im Wesentlichen über die Länge erstrecken. Das metallische Einlegeteil braucht sich aber nicht über die gesamte Tiefe der Lamelle zu erstrecken. Es reicht hier, dass ein Teil der Lamelle versteift wird, so dass die Lamelle insgesamt wesentlich steifer ist als eine Lamelle, die nur aus Kunststoff besteht. Wenn sich das Einlegeteil über etwa zwei Drittel der Länge erstreckt, so ist bei einer Lamellen dicke von ca. 2 bis 3 mm bereits eine so hohe Steifigkeit gegeben, dass ein Durchbiegen auch bei stärkeren mechanischen Belastungen unmöglich ist. Das Einlegeteil kann aber auch in der Länge kurz vor den Stirnseiten enden, so dass dann immer noch eine Einbettung gegeben ist. Als Einlegeteil kann ein Stanzteil verwendet werden. Dieses Stanzteil kann über die Länge verteilt Löcher aufweisen, in die der Kunststoff beim Umspritzen fließt, so dass eine sehr starre Verbindung entsteht. Die Löcher können Durchgangslöcher oder Sacklöcher sein. Es können aber auch gerippte oder geprägte Metallteile eingelegt werden.

Als besonders vorteilhaft hat es sich erwiesen, das Einlegeteil rückseitig über die Kunststoffeinbettung hinaus vorstehen zu lassen. Dadurch kann die vorstehende Metallschiene, die dadurch gegeben ist, zugleich als Führungsschiene für ein Schiebeelement, das auf die Lamelle aufgesetzt wird, verwendet werden. Auch kann das Metallteil als Stromschiene eingesetzt werden. Der überstehende Teil kann im Werkzeug auch als Abstützrippe verwendet werden. Der nicht umspritzte Teil kann zur farblichen Anpassung oder zum Verdecken beschichtet oder mit einem Farbauftrag versehen sein. In diesem Fall ist eine zweite Stromschiene, beispielsweise durch eine stromleitende Lackierschicht auf dem Kunststoffteil zu realisieren, um z.B. eine Lichtquelle, z.B. eine Diode innerhalb des Schiebeelementes, im Bedarfsfall mit Strom versorgen zu können.

Anstelle von Schiebeelementen können selbstverständlich auch Drehelemente angebracht sein, die manuell betätigbar sind und für unterschiedliche Funktionen verwendet werden können. Anstelle von Schiebeelementen, die in der Regel dazu dienen, um senkrecht verlaufende Lamellen über Mitkopplungselemente betätigen zu können, können auch Drehelemente vorgesehen sein, die zum gleichen Zweck oder zu anderen Funktionssteuerungen verwendet werden können. Ebenso können auch feststehende Anzeigeelemente angebracht sein. Dies ist insbesondere dann der Fall, wenn die Lamelle selbst als Steuerlamelle ausgebildet ist und durch ihr Verschwenken über Kopplungsglieder weitere Lamellen in einer Jalousie-Anordnung betätigt werden.

Spritztechnisch hat es sich auch als vorteilhaft erwiesen, das Einlegeteil in ein Spritzgießwerkzeug einzulegen und vorderseitig eine Materialverdickung in Wulstform anzuspritzen, so dass die Lamelle in Ausströmrichtung wulstförmig ausgebildet ist und der Luftstrom hierüber abgelenkt und verwirbelt werden kann. Die die Schwenkachse realisierenden Zapfen können stirnseitig an den Schmalflächen aus dem Kunststoff ausgeformt sein oder aber auch an den Einlegeteilen seitlich vorstehen und aus dem Kunststoff hervortreten, wenn es gewünscht ist, dass ein Metallzapfen als Lagerzapfen in eine Lagerausnehmung in der Gehäusewand eingesetzt werden soll.

Im Falle, dass das Einlegeteil die Kunststoffmasse rückseitig übersteht, können an dem Einlegeteil auch Anschläge, beispielsweise ein mittiger, nach hinten vorstehender breiter Ansatz vorgesehen sein, um den Schiebeweg eines Schiebeelementes zu begrenzen. Das Schiebeelement weist in der inneren Führung Seitenanschläge auf, so dass der Schiebeweg als solcher hierüber begrenzt wird. Die Schiebeelemente bestehen in der Regel aus zwei Seitenelementen, die von unten und oben auf die Lamelle aufgesetzt werden und miteinander durch Rast- oder Schweißverbindung verbunden sind. Solche Ausbildungen sind in den eingangs genannten Schriften angegeben.

Werden auch andere Lamellen versteift, die beispielsweise nicht als Steuerlamelle oder als Lamelle mit Einstellelementen ausgeführt sind, so kann nach der gleichen Weise verfahren werden. Dies hat den Vorteil, dass insbesondere bei langen Lamellen ein Durchbiegen durch Eigengewicht und/oder thermische Einwirkung vermieden wird.

Vorteilhafte Abmessungen von Lamelle und Einlegeteil, wie z.B. die Tiefen, sind im Anspruch 11, vorteilhafte Randüberstände des Einlegeteils im Anspruch 12 angegeben.

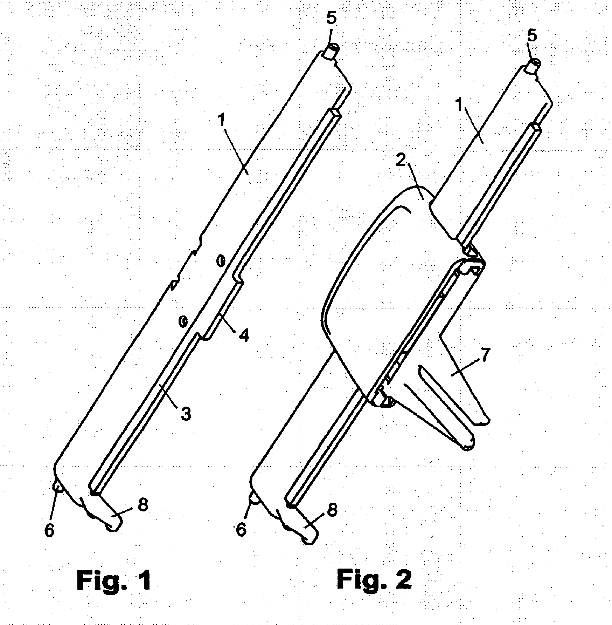

Die Erfindung wird nachfolgend anhand der in der Zeichnung dargestellten Figuren 1 und 2 ergänzend erläutert.

In Figur 1 ist eine Lamelle 1 dargestellt, die aus Kunststoff im Verbundspritzverfahren hergestellt ist. Als Einlegeteil 3 ist ein Blechstanzstreifen eingelegt, der mit Bohrungen versehen ist. Diese Bohrungen werden beim Umspritzen in einem Spritzwerkzeug mit der Kunststoffmasse verfüllt, so dass ein Teil entsteht, das aus dem metallischen Einlegeteil 3 und dem Kunststoffteil der Lamelle 1 gebildet wird. Es ist ersichtlich, dass durch das lange Einlegeteil 3 eine sehr steife Ausführung der Kunststofflamelle gegeben ist. Diese Kunststofflamelle 1 kann stirnseitig wulstförmig ausgeführt sein und oben und unten Lagerzapfen 5 aufweisen, so dass die Lamelle als Horizontal- oder Vertikallamelle eingesetzt werden kann. Die Darstellung zeigt eine lineare Ausführung. Die Lamelle kann aber auch geschwungen in Längsrichtung ausgeführt sein. Bei einer Lamelle mit einem aufgesetzten Schiebeelement, wie es aus Figur 2 ersichtlich ist, ist es jedoch empfehlenswert, zumindest den mittleren Teil, in welchem das Schiebeelement 2 verschieblich angeordnet ist, geradlinig auszuführen. Das Schiebeelement 2 kann z.B. wie in der DE 201 18 014 U1 oder in der DE 20 2004 006 461 U1 angegeben ausgebildet sein. Rückseitig können über das Mitkopplungselement 7 andere Lamellen in anderen Lagen betätigt werden. Die Lamelle 1 selbst weist im Ausführungsbeispiel unten jeweils einen Ansatz 8 mit Lagerungen für Kopplungsglieder auf, damit parallel liegende Lamellen beim Verschwenken mit verschwenkt werden können bzw. die Lamelle 1 durch einen gesonderten Antrieb verschwenkt werden kann. Diese Techniken sind bekannt und nicht erfindungsrelevant.

Die Darstellung in Figur 1 zeigt, dass mittig ein rückseitig herausstehender Ansatz 4 an dem Einlegeteil 3 vorgesehen ist. Dieser Ansatz weist äußere Ecken auf, die als Anschlagskanten für das Schiebeelement 2 dienen, das die Lamelle 1 in diesem Bereich vollständig umschließt. Der Ansatz gleitet in nicht dargestellte Ausnehmungen des Schiebeelementes, so dass eine seitliche Begrenzung des Schiebeweges hierdurch gegeben ist. Die Abbildungen zeigen ferner, dass der Einlegeteil 3 die Kunststoffmasse rückseitig übersteht, so dass dieser Teil zugleich als Führungsteil für das Schiebeelement mitverwendet werden kann.

## Patentansprüche

1. Verschwenkbar gelagerte Lamelle in einer Lamellenanordnung in einem Gehäuse einer Luftdüse mit einer vorderen Luftaustrittsöffnung und einem Anschluss an einen Luftzuführschacht, wobei mindestens eine Lamelle (1) aus Kunststoff besteht und mit einem versteifenden metallischen Element in Längserstreckung verbunden ist, das sich im Wesentlichen über die gesamte Länge der Lamelle (1) erstreckt, **dadurch gekennzeichnet, dass** das metallische Element ein Einlegeteil (3) ist, das in Kunststoff eingebettet und das mit einem Längsstreifen rückseitig aus dem Kunststoff vorsteht oder von dem Kunststoff vollständig umgeben ist.

2. Lamelle nach Anspruch 1, **dadurch gekennzeichnet, dass** mindestens eine Lamelle ein als Dreh- oder Schiebeelement ausgebildetes Einstellelement oder ein Anzeigeelement und ein versteifendes metallisches Einlegeteil aufweist.

3. Lamelle nach Anspruch 1 und 2, **dadurch gekennzeichnet, dass** der überstehende Randbereich des Einlegeteiles (3) zugleich Führungsteil für das Schiebeelement (2) ist und/oder eine Stromversorgungsschiene für das Anzeigeelement bildet.

4. Lamelle nach einem der vorhergehenden Ansprüche, **dadurch gekennzeichnet, dass** das Einlegeteil (3) rückseitig mindestens eine vorstehende Erhöhung oder einen Ansatz (4) aufweist, die bzw. der einen Anschlag für das Schiebeelement (2) bei seitlichem Verschieben bildet.

5. Lamelle nach Anspruch 2 oder 4, **dadurch gekennzeichnet, dass** das Schiebeelement (2) die Lamelle (1) in Tiefenrichtung beidseitig umschließt.

6. Lamelle nach Anspruch 1, **dadurch gekennzeichnet, dass** die Lamelle (1) aus den oberen und unteren Stirnflächen vorstehende Lagerzapfen (5, 6) aufweist.

7. Lamelle nach Anspruch 1, **dadurch gekennzeichnet, dass** im vorderen Bereich die Lamelle eine über mindestens eine Teillänge wulstförmige Verdickung aufweist, die den Luftstrahl beim Austritt verwirbelt oder ableitet.

8. Lamelle nach Anspruch 6, **dadurch gekennzeichnet, dass** die Lagerzapfen (5, 6) aus dem Kunststoff ausgeformte oder aus dem Einlegeteil (3) ausgearbeitete Ansätze sind oder dass das Einlegeteil (3) Ansätze aufweist, die sich in die aus Kunststoff bestehenden Lagerzapfen (5, 6) erstrecken.

9. Lamelle nach Anspruch 1, **dadurch gekennzeichnet, dass** das Einlegeteil (3) gerippt oder geprägt ist oder eine Rippen- oder Prägestruktur und/oder Löcher aufweist.

10. Lamelle nach Anspruch 1 oder 10, **dadurch gekennzeichnet, dass** das Einlegeteil (3) ein Stanzteil oder ein Druckgussteil ist.

11. Lamelle nach Anspruch 1, **dadurch gekennzeichnet, dass** die Lamelle (1) eine Tiefe von ca. 6 bis 20 mm und das Einlegeteil (3) eine Tiefe von ca. 4 bis 18 mm aufweisen.

12. Lamelle nach Anspruch 1, **dadurch gekennzeichnet, dass** der Rand ca. 1 bis 3 mm tief ist.

## Claims

1. Pivotably mounted slat in a slat arrangement in a housing of an air nozzle with a front air outlet opening and a connection with an air feed shaft, wherein at least one slat (1) consists of plastics material and is connected with a reinforcing metallic element in length direction, which extends substantially over the entire length of the slat (1), **characterised in that** the metallic element is an insert part (3) which is embedded in plastics material and which protrudes by a longitudinal strip rearwardly out of the plastics material or is completely surrounded by the plastics material.

2. Slat according to claim 1, **characterised in that** at least one slat comprises a setting element, which is constructed as a rotary or slide element, or an indicating element and a reinforcing metallic insert part.

3. Slat according to claim 1 and 2, **characterised in that** the protruding edge region of the insert part (3) is at the same time a guide part for the slide element (2) and/or forms a power supply rail for the indicating element.

4. Slat according to any one of preceding claims, **characterised in that** the insert part (3) has at the rear side at least one protruding elevation or an extension (4), which forms an abutment for the slide element (2) in the case of lateral displacement.

5. Slat according to claim 2 or 4, **characterised in that** the slide element (2) encloses the slat (1) at both sides in depth direction.

6. Slat according to claim 1, **characterised in that** the slat (1) comprises bearing pins (5, 6) protruding from the upper and lower end surfaces.

7. Slat according to claim 1, **characterised in that** in the front region the slat has a thickening which is bulge-shaped over at least a part length and which swirls or conducts away the air jet on discharge.

8. Slat according to claim 6, **characterised in that** the bearing pins (5, 6) are extensions moulded from the plastics material or processed from the insert part (3) or that the insert part (3) has extensions which extend in the bearing pins (5, 6) consisting of plastics material.

9. Slat according to claim 1, **characterised in that** the insert part (3) is ribbed or embossed or has a ribbed or embossed structure and/or holes.

10. Slat according to claim 1 or 10, **characterised in that** the insert part (3) is a stamped part or a die cast part.

11. Slat according to claim 1, **characterised in that** the slat (1) has a depth of approximately 6 to 20 millimetres and the insert part (3) has a depth of approximately 4 to 18 millimetres.

12. Slat according to claim 1, **characterised in that** the edge is approximately 1 to 3 millimetres deep.

## Revendications

1. Lamelle logée de manière à pouvoir pivoter dans une installation de lamelles à l'intérieur d'un boîtier d'une buse d'air comprenant un orifice avant de sortie d'air et un raccordement à une gaine d'amenée d'air, au moins une lamelle (1) étant en matière plastique et étant reliée à un élément métallique raidisseur dans l'étendue longitudinale, lequel s'étend pour l'essentiel sur toute la longueur de la lamelle (1), **caractérisée en ce que** l'élément métallique est un insert (3) qui est enrobé dans de la matière plastique et qui, côté arrière, dépasse de la matière plastique avec une bande longitudinale ou qui est entièrement entouré de la matière plastique.

2. Lamelle selon la revendication 1, **caractérisée en ce qu'**au moins une lamelle présente un élément de réglage conçu comme élément rotatif ou coulissant, ou un élément indicateur et un insert métallique raidisseur.

3. Lamelle selon les revendications 1 et 2, **caractérisée en ce que** la zone de bord saillante de l'insert (3) sert en même temps de partie de guidage pour l'élément coulissant (2) et/ou forme une barre d'alimentation électrique pour l'élément indicateur.

4. Lamelle selon l'une quelconque des revendications précédentes, **caractérisée en ce que** l'insert (3) présente côté arrière au moins une élévation saillante ou un épaulement (4), laquelle et/ou lequel forme une butée pour l'élément coulissant (2) lors du déplacement latéral.

5. Lamelle selon la revendication 2 ou 4, **caractérisée en ce que** l'élément coulissant (2) entoure la lamelle (1) des deux côtés dans le sens de la profondeur.

6. Lamelle selon la revendication 1, **caractérisée en ce que** la lamelle (1) présente des tourillons (5, 6) dépassant des surfaces frontales supérieure et inférieure.

7. Lamelle selon la revendication 1, **caractérisée en ce que** dans la zone avant la lamelle présente un renflement en forme de bourrelet sur au moins une longueur partielle, lequel renflement fait tourbillonner ou dérive le jet d'air lors de la sortie.

8. Lamelle selon la revendication 6, **caractérisée en ce que** les tourillons (5, 6) sont des épaulements formés à partir de la matière plastique ou façonnés à partir de l'insert (3), ou **en ce que** l'insert (3) présente des épaulements qui s'étendent dans les tourillons (5, 6) en matière plastique.

9. Lamelle selon la revendication 1, **caractérisée en ce que** l'insert (3) est nervuré ou gaufré ou présente une structure nervurée ou gaufrée et/ou des trous.

10. Lamelle selon la revendication 1 ou 10, **caractérisée en ce que** l'insert (3) est une pièce découpée ou une pièce moulée sous pression.

11. Lamelle selon la revendication 1, **caractérisée en ce que** la lamelle (1) présente une profondeur d'environ 6 à 20 mm et l'insert (3) une profondeur d'environ 4 à 18 mm environ.

12. Lamelle selon la revendication 1, **caractérisée en ce que** le bord présente une profondeur d'environ 1 à 3 mm environ.
